# Europäisches Patentamt
## European Patent Office
## Office européen des brevets

(11) Publication number: **0 096 447**
**B1**

(12) **EUROPEAN PATENT SPECIFICATION**

(45) Date of publication of patent specification: **10.09.86**

(51) Int. Cl.⁴: **C 08 F 279/02, C 08 F 291/02**
**// (C08F279/02, 212:00)**

(21) Application number: **83200794.2**

(22) Date of filing: **02.06.83**

(54) Rubber reinforced polymers of monovinylidene aromatic compounds and a method for their preparation.

(30) Priority: **04.06.82 NL 8202281**

(43) Date of publication of application:
**21.12.83 Bulletin 83/51**

(45) Publication of the grant of the patent:
**10.09.86 Bulletin 86/37**

(84) Designated Contracting States:
**AT BE CH DE FR GB IT LI NL SE**

(56) References cited:
**US-A-3 903 199**
**US-A-3 903 200**
**US-A-4 146 589**
**US-A-4 153 645**
**US-A-4 277 574**
**US-A-4 334 039**

**CHEMICAL ABSTRACTS, vol. 93, no. 36,**
**December 1980, page 41, no. 240501c,**
**Columbus, Ohio, USA**

(73) Proprietor: **THE DOW CHEMICAL COMPANY**
**2030 Dow Center Abbott Road P.O. Box 1967**
**Midland, MI 48640 (US)**

(72) Inventor: **Damen, Julien Helene Joseph Marie**
**Veeweg 18**
**B-9050 Evergem (BE)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

# Description

The present invention relates to rubber-reinforced polymers of monovinylidene aromatic compounds and a method for preparing the rubber-reinforced polymer products.

Rubber-reinforced polymers of a polymer of styrene having discrete particles of a crosslinked rubber, e.g., polybutadiene, dispersed throughout the styrene polymer matrix (conventionally referred to as high impact polystyrene or HIPS) are employed in a variety of commercial applications such as packaging, refrigerator linings, furniture, domestic appliances and toys.

It is well known that the physical properties such as toughness (i.e., the combination of elongation and impact strength) and gloss of the rubber-reinforced styrene polymers are affected by the size and composition of the disperse rubber particles and/or the concentration of the rubber in the reinforced polymer. For example, the preparation of a rubber reinforced styrene polymer at low concentrations of rubber in the styrene polymer matrix and/or rubber particles of a small size is known to improve the tensile strength and gloss characteristics of the polymer but to reduce the values obtained for elongation-at-break and impact strength in standard toughness tests. Unfortunately, increasing the rubber concentration sufficiently to obtain the required toughness reduces the gloss characteristics of products prepared therefrom while also increasing costs. Similarly, increasing the rubber particle size has also met with limited success since sufficiently large rubber particles cause a reduction in the tensile strength and gloss characteristics.

To improve the overall balance of properties in a rubber reinforced styrene polymer, it has theretofore been proposed to prepare the styrene polymer with rubber particles of two different sizes being dispersed through the matrix. For example, Canadian Patent No. 832,523 discloses a polystyrene composition comprising a continuous phase of a styrene polymer having rubber particles of a size from 1 to 3 micron and rubber particles of a size from 5 to 25 micron dispersed therethrough. Unfortunately, the described composition does not possess the required balance of properties, particularly the desired gloss characteristics for many end-use applications. Moreover, the specifically exemplified method for preparing the composition comprises the energy intensive process of physically blending two polystyrene compositions each containing rubber particles of a different particle size which requires relatively expensive and complex equipment.

Various other methods and rubber-reinforced polymers comprising dispersed rubber particles exhibiting a bimodal particle size distribution have been proposed. For example, U.S. Patent No. 4,221,883 provides an efficient method for obtaining a rubber-reinforced polymer having rubber of two distinct sizes dispersed throughout the continuous polymer phase. In an example of said method, a rubber/monomer solution is polymerized using thermal or chemical initiation until the rubber becomes dispersed in the polymerization mixture as a plurality of rubber particles having a first particle size and subsequently, adding more rubber as a solution with monomer to the polymerization mixture which becomes dispersed at a second particle size. In alternative methods for preparing the rubber-reinforced product, control of particle size of the different size rubber particles within limited ranges has been disclosed to yield a product of superior properties. Specifically, in U.S. Patent No. 4,146,589, a first and a second rubber/monomer solution are polymerized in separate reactors to form a partial polymerizate containing disperse, grafted, rubber particles of 0.5 to 1 micron and a partial polymerizate containing disperse, grafted, rubber particles of 2 to 3 microns. The two partial polymerizates are subsequently mixed, polymerization completed in a staged, isobaric reactor and the rubber then cross-linked to achieve a swelling index from 7 to 20. Similarly, U.S. Patent 4,254,236 discloses simultaneous feeding to a flow-through, back-mixed, polymerization reactor of a first solution of a monomer and rubber and a second solution of a monomer and rubber containing polymerized monomer. The conditions in the reactor are maintained such that the rubber of the first solution is dispersed at a size from 0.5 to 1.5 micron and the rubber of the second solution at a size from 2 to 10 microns. Following partial polymerization, the polymerization is completed in a second reactor and the rubber subsequently crosslinked. While the rubber-reinforced polymers prepared by disclosed processes exhibit a certain improvement in physical properties, further improvements in the balance of properties of the exemplified products, particularly the balance of elongation, impact and gloss characteristics are still desirable.

In yet other methods, control of the graft levels of the rubber in the small and large particles has been stated to improve the properties of the rubber-reinforced product. For example, U.S. Patent No. 3,663,656 teaches that the smaller rubber particles (i.e., size of less than 0.254 micron) should have a superstrate to substrate ratio from 45—100:100 and the larger rubber particles (i.e., particle size from 0.35 to 1.25 micron) should have lesser amounts of graft with a superstrate to substrate ratio varying from 15—40:100. Alternatively, U.S. Patent No. 4,153,645 discloses a rubber of the larger size particle (particle size from 0.9 to 5 microns) should be relatively highly grafted with a superstrate to substrate ratio of from 140—180:100. The superstrate to substrate ratio of the smaller rubber particle graft copolymer (particle size from 0.2 to 0.9 micron) is varied from 65—125:100. Unfortunately, the methods disclosed for preparing the rubber-reinforced product comprise the energy intensive step of physically blending two products.

Australian Patent Abridgment 49 552/79 describes a method for continuously mass polymerizing polyblends having a dispersed rubber phase of rubber particles with a bimodal particle size distribution. The smaller size rubber particles are prepared by adding a rubber/monomer solution to a back-mixed continuous stirred tank reactor wherein the contents of the reactor are essentially uniform throughout. Almost immediately upon the addition of the monomer/rubber solution to the reactor, the rubber becomes dispersed throughout the continuous polymer phase. Shear created by the agitation in the reactor is employed to size the dispersed rubber at a particle size of from 0.5 to 1 micron. Due to the inherent limitations of the polymerization process, the rubber formed at the smaller rubber particle size is not effectively grafted with the polymerized monomer. Subsequently, a second monomer/rubber solution is fed simultaneously with the partially polymerized product to a second reactor—a multi state substantially linear flow polymerization reactor—where polymerization is completed and a rubber having a particle size of from 2 to 5 microns is prepared. Due, in part, to the lack of grafting of polymer to the rubber particles, the resulting rubber-reinforced polymer does not exhibit the most desirable balance of physical properties.

U.S. Patent No. 3 903 199 relates to a method for preparing a rubber-reinforced polymer by mass polymerizing a solution of a monoalkanyl aromatic monomer, an ethylenically unsaturated nitrile and a soluble diene-containing rubber to provide a polymerization mixture containing rubber particles having an average particle size of from 0.7 to 10 microns and a superstrate to substrate ratio of 0.1:1 to 2.5:1, most preferably from 0.3:1 to 1.5:1. Following polymerization, a second grafted diene rubber is continuously dispersed into the partially polymerized mixture, the second diene rubber having an average particle size of from 0.01 to 0.5 microns and being grafted with from 0.1 to 2.5 parts of monomer per one part of rubber. The described process is directed exclusively to the preparation of copolymers of a monovinylidene aromatic and an ethylenically unsaturated nitril ('ABS' resins).

Moreover, improvements in the balance of properties of the final, blended products are again desired.

In view of the stated deficiencies in the rubber-reinforced products prepared by the methods disclosed in the prior art, it remains highly desirable to provide a method for preparing a rubber-reinforced polystyrene-containing rubber having a bimodal particle size distribution and having an improved balance of physical properties.

Accordingly, in one aspect, the present invention is a rubber-reinforced polymer comprising a polymer derived from one or more polymerizable monovinylidene aromatic compounds having discrete, grafted rubber particles dispersed throughout the polymer, wherein from 70 to 95 weight percent of the total amount of rubber is present in particles having a volume average diameter from 0.5 to 1.5 micrometer and from 5 to 30 weight percent of the total amount of rubber is present in particles having a volume average diameter from 4 to 10 micrometer. In one embodiment of this invention, the total amount of polymer grafted to the rubber of the smaller size rubber particles is at least 1.3 times the weight of the rubber in said particles.

In a second embodiment, the rubber is a homopolymer or copolymer of 1,3-butadiene and the amount of polymer grafted to the total rubber in both the small and large size rubber particles is at least 1.3 times the weight of the rubber in said particles and distributed between the rubber of the large and small particles such that the gloss of the rubber-reinforced polymer is at least 70 percent, the elongation is at least 25 percent, the Izod impact, measured in joules per meter (J/m), is at least 10 times the percent of butadiene in the rubber in the rubber-reinforced polymer and the melt-flow rate is at least 3 grams per 10 minutes, more preferably 3—12 and most preferably 4—10 g/10 min.

In another aspect, the present invention is a method for preparing the rubber-reinforced polymer of one or more monovinylidene aromatic compounds having rubber of two different particle sizes dispersed through the aromatic polymer matrix. The method comprises mass polymerizing a first mixture comprising a solution of one or more polymerizable monovinylidene aromatic compounds and a rubber in the presence of an initiator which promotes polymer grafting to the rubber (hereinafter referred to as a "graft promoting initiator") and at conditions sufficient to form a continuous phase containing polymer of the monovinylidene aromatic and discrete particles of highly grafted rubber having a volume average diameter from 0.5 to 1.5 micrometer. A second rubber-containing mixture which rubber can be the same as or different from the rubber of the first mixture, is subsequently admixed with the polymerization mixture at conditions such that the previously formed rubber particles remain dispersed throughout the continuous polymer phase. The newly added rubber comprises from 5 to 30 weight percent of the rubber of the first and second rubber/monomer mixtures and is dispersed as discrete particles having a volume average diameter from 4 to 10 microns.

In a preferred method, the first mixture, prior to the addition of the second rubber-containing mixture, is polymerized at conditions sufficient to form a continuous phase of a partially polymerized, monovinylidene aromatic compound having highly grafted, rubber particles of the desired size dispersed therethrough and a second rubber-containing mixture comprising a solution of rubber and one or more polymerizable monovinylidene aromatic compounds is added to the partially polymerized product. Polymerization is subsequently completed and the polymerization mixture subjected to conditions sufficient to remove the unreacted monomers and to crosslink the rubber.

The amounts of polymer grafted to the rubber, particularly the amounts of polymer grafted to the rubber of the smaller size rubber particles, has been found to significantly affect the balance of properties of a polymer reinforced with dispersed rubber particles having a bimodal size distribution. Surprisingly, when prepared having the bimodal rubber particle size distribution hereinbefore specified, a rubber-reinforced polymer having a desirable balance of toughness and gloss characteristics can be prepared by sufficiently grafting the rubber of the smaller size particles. Moreover, such rubber-reinforced polymers can be prepared at a variety of melt flow indexes for use in extrusion or injection molding applications.

Due to the excellent balance of gloss and toughness properties, the high impact polystyrene compositions of the present invention are useful in a wide variety of applications such as the injection molding of refrigerator liners, household appliances, toys and furniture. These rubber-reinforced polymers are also useful in extrusion applications such as in the preparation of a gloss layer using co-extrusion techniques.

The rubber-reinforced polymers of the present invention are derived from one or more monovinylidene aromatic compounds. Representative monovinylidene aromatic compounds include styrene, alkyl substituted styrenes such as α-alkyl-styrenes (e.g., α-methyl-styrene and α-ethyl-styrene) and ring substituted styrenes (e.g., vinyl-toluene, particularly, p-vinyl-toluene, o-ethylstyrene and 2,4-dimethyl-styrene); ring substituted halo-styrenes such as chloro-styrene, 2,4-dichloro-styrene and the like; and styrene substituted with both a halo and alkyl group such as 2-chloro-4-methylstyrene, vinyl anthracene and mixtures thereof. In general, the polymer matrix is preferably derived from styrene in combination with α-methyl-styrene, with styrene being the most preferred monovinylidene aromatic compound.

The rubber employed in preparing the rubber modified polymer of the present invention is generally a homopolymer or copolymer of an alkadiene or a copolymer of ethylene, propylene and, optionally, a non-conjugated diene. Advantageously the rubber is a homopolymer of a 1,3-conjugated diene such as butadiene, isoprene, piperylene, chloroprene and the like or a copolymer of said conjugated dienes with a monovinylidene aromatic compound such as styrene; an α,β-ethylenically unsaturated nitrile such as acrylonitrile; an α-olefin such as ethylene or propylene; and the like. Although the rubber may contain a small amount of a cross-linking agent, excessive crosslinking can result in loss of the rubbery characteristics and/or render the rubber insoluble in the monomer.

The rubbery polymers preferably employed in the preparation of both the smaller and larger size, disperse rubber particles exhibit a second order transition temperature not higher than about 0°C and preferably not higher than about −20°C as determined by conventional methods, e.g., ASTM Test Method D-746-52T. Preferred rubber polymers are homopolymers of 1,3-butadiene and block or random copolymers of at least about 55, more preferably from 65 to 85, weight percent, 1,3-butadiene and up to about 45, more preferably from about 15 to about 35, weight percent, of a monovinylidene aromatic compound, preferably styrene. The rubber is advantageously employed in amounts such that the rubber-reinforced polymer product (the rubber in both the small and large particles) contains from 3 to 15 weight percent rubber, with from 5 to 10 weight percent rubber, based on the total weight of the rubber-reinforced polymer, being preferred.

In the rubber-reinforced polymer of the present invention, the rubber is dispersed throughout the polymer matrix as discrete particles having a bimodal size distribution with 70 to 95 weight percent of the dispersed rubber having a volume average diameter from 0.5 to 1.5 micrometer and from 5 to 30 weight percent of the dispersed rubber having a volume average diameter from 4 to 10 micrometer. Said particle size (diameter) is the diameter of the particles, including all occlusions generally present in the disperse rubber particles of a rubber-reinforced polymer prepared using mass polymerization techniques and is measured using conventional techniques such as by a Coulter Counter supplemented by visual phase contrast microscopy or electron microscopy techniques.

In one embodiment, the amount of polymer grafted to the rubber present in the smaller size rubber particle is at least 1.3 times the weight of the rubber in said particles.

Although any suitable method can be employed to measure the amounts of grafted polymer on the smaller size rubber particle, such measurement is difficult using the rubber-reinforced polymer containing both the large and small rubber particles. More conveniently, the amount of polymer grafted to the rubber of the smaller particle is more easily determined prior to the addition of the second rubber-containing mixture and for the purposes of this invention, the grafted polymer on the smaller size rubber particles can be measured by preparing a rubber-reinforced polymer using the identical preparation method employed in preparing the rubber-reinforced product having disperse rubber of a bimodal size distribution except that a second rubber-containing mixture is not admixed with the polymer containing the smaller size rubber particles. (See, for example Note 2 of the Table in Example 1). Subsequently, the total polymer grafted to the rubber of the resulting rubber-reinforced product which contains only the smaller size, rubber particles is measured. For the purposes of this invention, the grafted polymer is determined using the selective extraction techniques described in Note 2 of the Table in the Example.

Within the foregoing limitations, the rubber particle size and amount of each size rubber particle and amounts of grafted polymer are selected to achieve the balance of properties (particularly, the balance of gloss, elongation and impact strength) desired in the polymer product and will vary depending on the monomer(s), rubber(s) and polymerization method employed. In general, the rubber-reinforced polymer advantageously exhibits a gloss of at least 60, preferably at least 70, more preferably at least 80, percent and an elongation of at least 18, preferably at least 25, more preferably at least 30, percent. Impact strength is particularly dependent on the specific rubber employed and its concentration in the rubber-reinforced polymer. Using the preferred homo- or copolymers of 1,3-butadiene, the impact strength, expressed as joules/meter (J/m), is advantageously at least 10, preferably at least 12, more preferably at least 14, times the percent butadiene in the rubber.

For the purposes of this invention, the gloss values are determined by ASTM Test Method designated D-253-80, 60°, on an injected molded sample prepared as described in Note 4 in the Table of the Example. The impact strength which is a notched Izod impact and elongation are determined using basic state test specimens prepared using the methods described in International Standard 2897/2 and the test methods specified therein. The melt flow rates are determined by the method of ASTM D-1238, Condition G (200°C; 5,000 g load).

In practice, the balance of properties most advantageously exhibited by the rubber-reinforced polymer is dependent on the polymer's end use application and can vary widely. For example, the products which require a higher gloss (i.e., at least 85 percent) often do not require an extremely high impact strength (i.e., an impact strength, expressed in J/m, of not much in excess of 10 times the percent butadiene rubber in the product) whereas products which require relatively high impact strengths (i.e., impact strengths, expressed as J/m, of at least 16 times the percent butadiene rubber in the product) do not require extremely high gloss levels (i.e., a 60 percent gloss often being sufficient).

In general, the smaller size rubber particles preferably possess a volume average diameter from 0.6 to 1.2 micrometer and the larger size rubber particles have a volume average diameter from 4 to 8 micrometer with the rubber-reinforced polymer preferably comprising from 80 to 90 weight percent of the smaller size particles and from 10 to 20 weight percent of the larger size rubber particles, said weight percents being based on the total weight of rubber employed. The amount of grafted polymer of the smaller size rubber particles is preferably at least 1.5, more preferably 1.7 times the weight of the rubber in said particles. The total amount of polymer grafted to the rubber of both the large and small rubber particles is at least 1.3, preferably at least 1.5, more preferably at least 1.7 times the total weight of said rubber.

The properties of the rubber-reinforced polymers of this invention are dependent on the amounts, if any, of a plasticizer added prior to or during the polymerization of the monovinylidene aromatic compound(s). The plasticizer or lubricant affects the properties of the rubber-reinforced polymer products, e.g., flow and heat resistant properties, and the amounts most advantageously employed are determined by the desired physical properties. In general, to obtain the most desirable balance of properties, the plasticizer or lubricant is advantageously employed in relatively high concentrations of up to 15, preferably from 1 to 8, more preferably from 1 to 7, weight percent based on the total weight of the rubber-reinforced polymer.

In the practice of the present invention, a rubber-reinforced polymer having the highly grafted, smaller size, rubber particles is prepared by mass polymerizing a first mixture comprising a solution of the rubber and monomer in the presence of a graft promoting initiation means at conditions sufficient to form highly grafted, rubber particles of the desired particle size dispersed throughout the polymerized monomer. In general, continuous methods for mass polymerizing the monomer in the monomer/rubber solution which results in a highly grafted, rubber particle of the desired particle size are advantageously employed. The polymerization is preferably conducted in one or more substantially linear stratified flow or so-called plug-flow type reactors such as described in U.S. Patent 2,727,884, which may or may not comprise recirculation of a portion of the partially polymerized product or, alternatively, but less preferably, in a stirred tank reactor wherein the contents of the reactor are essentially uniform throughout. In general, in mass polymerization processes using a plug-flow type reactor, upon initial formation of polymer, the initially present polymer comes out of solution and forms a discontinuous phase comprising polymer dissolved in monomer dispersed throughout a continuous phase of the solution of rubber and monomer. Eventually, sufficient amounts of the monomer are polymerized and the discontinuous phase becomes the continuous phase with the rubber forming a discontinuous phase dispersed therethrough. This phenomenon is referred to as "phase inversion" which term means generally the conversion of the polymer from a discontinuous phase dispersed in the continuous phase of the rubber through the point where there is no distinct continuous or discontinuous phase in the polymerization mixture to a continuous polymer phase having the rubber dispersed therethrough. Alternatively, using continuous polymerization techniques and a stirred tank reactor, phase inversion occurs essentially immediately upon the addition of the monomer/rubber solution to the remainder of the polymerization mixture.

Any initiator capable of imparting the desired grafting of polymer to the rubber of the smaller size rubber particle at the conditions of polymerization employed can be suitably employed as the graft promoting initiation means in the preparation of the rubber-reinforced polymer. The efficiency of an initiator in promoting polymer grafting is dependent on the temperature of polymerization, initiator and rubber concentrations. Initiators which sufficiently promote graft at the desired polymerization temperatures are generally free radical type initiators and are readily determinable by persons killed in the art. (See, for example, Kinetik der Radikalischen Propfung von Styrol auf Polybutadiene by J. P. Fischer in Bio Angewandte Makromolekulare Chemie, Vol. 33, No. 485, 1973, ppg. 35—74). Representative of such initiators include the peroxide initiators such as the peresters, e.g., tertiary butyl peroxybenzoate and tertiary butyl peroxyacetate, dibenzoyl peroxide, dilauroyl peroxide, 1,1-bis tertiary butyl peroxycyclohexane, 1,3-bis tertiary butyl peroxy - 3,3,5 - trimethyl cyclohexane, di-cumyl peroxide; photo chemical initiation techniques and the like. Preferred high graft initiators include dibenzoyl peroxide, tertiary butyl peroxy benzoate, 1,1-bis tertiary butyl peroxy cyclohexane and tertiary butyl peroxy acetate. In general, to obtain the desirably high level of polymer grafting on the small rubber particles, the initiator is used in relatively high concentrations. Such concentrations are dependent on a variety of factors including the specific initiator employed, the desired levels of polymer grafting and the conditions at which the mass polymerization is conducted. Specifically, in the preferred process for preparing rubber-reinforced polymers which employs one or more substantially linear flow or plug-flow type reactors, from about 100 to 2000, preferably from 150 to 1000, weight parts of the initiator are employed per million weight parts of monomer. Alternatively, if the polymerization is conducted in a continuous manner using a stirred tank reactor where the contents of the reactor are essentially uniform throughout, from 200 to 5000 weight parts of the graft promoting initiator are employed per million parts of monomer.

In addition to the monomer, rubber and graft promoting initiator, the mass polymerization mixture preferably contains the aforementioned plasticizer or lubricant and optionally, but advantageously, reaction diluent. Reaction diluents advantageously employed include normally liquid organic materials which form a solution with the polymerizable monomers and the polymer prepared therefrom. Representative of such organic liquid diluents include aromatic and inertly substituted aromatic hydrocarbons such as benzene, ethylbenzene, toluene, xylene or the like; saturated or inertly substituted, saturated aliphatics having either straight or branched chain of 5 or more carbon atoms, such as heptane, hexane, octane or the like; alicyclic or inertly substituted alicyclic hydrocarbons having 5 or 6 carbon atoms such as cyclohexane and the like. Preferred of such organic liquid diluents employed herein are the inertly substituted aromatics; with ethylbenzene and xylene being most preferred. If employed, the reaction diluent is generally employed in an amount from 2 to 20 weight percent based on the total weight of rubber, monomer and diluent.

Although the plasticizer or lubricant can be added at any intermediate stage of polymerization, it is preferable to add it with the feed stream of the monomer/rubber solution and the feed stream advantageously contains up to 15, preferably from 2 to 8, weight percent of the plasticizer or lubricant based on the total weight of monomer and rubber.

The mass polymerization mixture preferably contains other materials such as an antioxidant (e.g., alkylated phenols such as di - *tert* - butyl - *p* - cresol or phosphites such as trisnonyl phenyl phosphite); a polymerization aid, e.g., chain transfer agent, such as an alkyl mercaptan such as n-dodecyl mercaptan or a mold release agent, e.g., zinc stearate. In general, to facilitate obtaining the polymer graft on the rubber of the smaller rubber particle having the most desirable molecular weight the chain transfer agent, if employed, is generally employed in amounts ranging from 0.01 to 0.5 weight percent based on the first rubber/monomer mixture and is added to the polymerization mixture only after phase inversion. The mold release agent, if employed, is generally preferably added after phase inversion.

The temperatures at which polymerization is most advantageously conducted are dependent on the specific components, particularly graft promoting initiator, employed but will generally vary from 60° to 190°C.

Subsequent to phase inversion and, following essential size stabilization of the highly grafted, small size, rubber particles, the polymer containing the small size rubber particles is admixed with a second rubber-containing mixture and the rubber-reinforced polymer product having rubber of a bimodal size distribution is prepared.

In one method for preparing the rubber-reinforced polymer product, the polymerization of the partially polymerized mixture that contains the highly grafted, small size, rubber particle is completed and subjected to conditions sufficient to crosslink the rubber and remove any unreacted monomer. Subsequently, this polymer product is mechanically blended with the desired amounts of another polymer product containing the large size rubber articles at conditions to form the rubber-reinforced polymer product having rubber particles of a bimodal size distribution dispersed therethrough.

In another method for preparing the rubber-reinforced polymer product, a partial polymerizate comprising a polymerized monovinylidene aromatic compound having rubber of a larger particle size dispersed therethrough is admixed with a partial polymerizate of the polymerized monovinylidene aromatic compound having the highly grafted, smaller size, rubber particles dispersed therethrough. Polymerization of the resulting mixture is subsequently completed and the mixture then subjected to conditions sufficient to crosslink the rubber and remove residual monomer.

In the preferred method for preparing the rubber-reinforced polymer product, the second rubber containing mixture comprises a solution of one or more polymerizable monomers of a monovinylidene aromatic compound and rubber. This second rubber/monomer solution is admixed with the polymerization mixture comprising a partial polymerizate of a monovinylidene aromatic compound having the highly grafted, smaller size, rubber particles dispersed therethrough and polymerization subsequently completed.

In general, the second monomer/rubber solution added to the polymerization mixture advantageously comprises the rubber, polymerizable monomer(s) or a monomer/polymer blend, and optionally, other components such as a reaction diluent, polymerization aids, e.g., initiator and/or chain transfer agent, and the like. Both the rubber and monovinylidene aromatic compound(s) can be different from those in the first rubber-containing mixture, but the rubber and monovinylidene aromatic compound(s) are generally the same as found in the initial feed. In general, the second rubber solution is added to the polymerization mixture prior to the polymer grafting of the rubber in solution with the monomer. Alternatively, the rubber can be partially grafted with polymer prior to its addition. The degree to which the polymer is pre-grafted can be varied over wide ranges with the most advantageous amount of polymer pre-grafting varying depending on the specific monomer and rubber employed and the desired properties of the finished product.

Following addition of the second solution of monomer and rubber of the polymerization mixture, the added rubber is dispersed in the continuous polymer phase at the desired particle size. Polymerization is completed by subjecting the admixture to elevated temperatures which generally range from 100° to 190°C and then subjecting the admixture to conditions sufficient to crosslink the rubber and remove any unreacted monomer.

Using any of the illustrated embodiments, crosslinking of the rubber in the polymerized monomer and removal of the unreacted monomers, as well as any reaction diluent, if employed, and other volatile materials is advantageously conducted employing conventional devolatilization techniques, such as introducing the polymerization mixture into a devolatilization chamber, flashing off the monomer and other volatiles at elevated temperatures, e.g., from 200° to 300°C, under vacuum and removing them from the chamber.

The following examples are set forth to illustrate the advantages of the present invention and should not be construed to limit its scope. In the examples, all parts and percentages are by weight unless otherwise indicated.

Example 1

A rubber-reinforced polymer of styrene comprising a polystyrene matrix having rubber of a bimodal particle size distribution dispersed therethrough is prepared using several plug-flow type reactors essentially as described in U.S. Patent No. 2,727,884. The reactors are connected in series and each reactor is equipped with a variable speed agitator and heating and cooling means. To the top of the first reactor is continuously added 85 parts of a solution comprising 7.2 percent of a low cis polybutadiene rubber sold as Diene 55 NF-A by the Firestone Tire and Rubber Co., 8.5 percent ethylbenzene, 4.5 percent refined mineral oil, 0.035 percent tertiary butyl peroxybenzoate, a graft promoting initiator, and the balance styrene. The polymerization conditions are controlled such that after phase inversion, highly grafted, rubber particles of a desirably small size are dispersed throughout a partially polymerized polymer of styrene. When the solids content of the polymerization mixture approximates 50 percent, 15 parts of a second rubber-containing mixture having the same composition as that added to the top of the first reactor is added to the polymerization mixture. A n-dodecyl mercaptan (300 weight parts per 1 million weight parts of the feed stream) chain transfer agent, a mold release agent and an antioxidant are added to the polymerization mixture after phase inversion but prior to the addition of the second rubber-containing mixture. Following the addition of the second mixture, polymerization is continued at conditions such that the newly added rubber becomes dispersed through the polymer phase as rubber particles having a desirably large particle size. Polymerization is then continued until the desired conversion of monomer to polymer is achieved. The resulting mixture is then discharged from the base of the last reactor and passed to a devolatilizer, wherein the rubber is further cross-linked and the residual monomer and ethylbenzene are removed from the polymerization mixture and recycled to the polymerization process. This rubber-reinforced polystyrene is designated Sample No. 1.

A rubber-reinforced polystyrene comprising rubber having a bimodal particle size distribution is prepared using the techniques described in preparing Sample No. 1 except that the feed solution contained 5 percent of a refined mineral oil and 0.04 percent of the graft promoting initiator and 500 weight parts of a chain transfer agent per 1 million weight parts of the feed stream is employed. In addition, in the second rubber-containing mixture, no initiator is present. The rubber-reinforced polystyrene thus prepared is designated Sample No. 2.

## Comparative Example A

A rubber-reinforced polystyrene having dispersed rubber particles of a monomodal particle size is prepared using the techniques described in Example No. 1 except that the first and second rubber-containing mixtures are blended and the resulting blend added to the top of the first reactor. No subsequent addition of rubber is conducted. The rubber-reinforced polystyrene thus prepared is designated Sample No. A.

## Comparative Example B

A rubber-reinforced polystyrene having dispersed rubber particles of a monomodal size distribution is prepared in an identical manner to that employed in preparing Sample No. A except that the agitation speeds are controlled so as to increase the particle size of the dispersed rubber. The rubber-reinforced polystyrene prepared using these techniques is designated Sample No. B.

## Comparative Example C

A rubber-reinforced polystyrene having rubber particles of a bimodal particle size distribution is prepared using the techniques described in Example No. 1 except that the agitator speeds are controlled such that the particle size of the larger rubber particles is reduced sufficiently to make the rubber-reinforced polystyrene product outside of the scope of the present invention. The rubber-reinforced polystyrene thus prepared is designated Sample No. C. Although the average physical properties specified in Table I indicate the product of this comparative example to have a desirable balance of toughness and gloss characteristics, the measured impact strengths were erratic, varying from far below the reported value to somewhat above the reported figure.

## Comparative Example D

A rubber-reinforced polystyrene having a rubber of bimodal particle size distribution dispersed through a continuous polystyrene matrix is prepared using the techniques of Example No. 1 except that the agitation is controlled such that the size of the smaller rubber particles is increased sufficiently to make the polystyrene product outside the scope of the present invention. The rubber-reinforced polystyrene product prepared using these techniques is designated Sample No. D.

The particle size of the disperse rubber phase, the total amount of grafting on both the large and small rubber particles, the amounts of grafting on the small rubber particles, the Izod impact strength, gloss and elongation at break of Sample Nos. 1, 2 and A—D are measured. The results of these measurements are set forth in the accompanying table.

TABLE I

| Sample No. | Disperse rubber phase[1] | | | | | Graft[2] | |
| | Smaller size | | Larger size | | Total rubber % | Total | Small rubber particle |
| | RPS | % | RPS | % | | | |
| --- | --- | --- | --- | --- | --- | --- | --- |
| 1 | 1.0 | 85 | 6.5 | 15 | 8.5 | 1.37 | 1.51 |
| 2 | 1.0 | 85 | 6.0 | 15 | 8.5 | 1.54 | 1.71 |
| A* | 1.0 | 100 | — | — | 8.5 | 1.51 | — |
| B* | 2.2 | 100 | — | — | 8.5 | 1.55 | — |
| C* | 1.0 | 85 | 3.0 | 15 | 8.5 | 1.38 | 1.51 |
| D* | 2.2 | 85 | 6.5 | 15 | 8.5 | 1.40 | 1.55 |

TABLE I (continued)

| Sample No. | Izod impact strength[3] | | Gloss, %[4] | Elongation at break, %[5] |
|---|---|---|---|---|
| | J/m | N | | |
| 1 | 117 | 13.7 | 75 | 40 |
| 2 | 134 | 15.8 | 75 | 30 |
| A* | 117 | 13.7 | 85 | 14 |
| B* | 171 | 20.1 | 35 | 20 |
| C* | 112 | 13.2 | 80 | 20 |
| D* | 160 | 18.8 | 25 | 40 |

\* Not an example of the present invention.

[1] The disperse rubber phase is characterized by particle size, the total percent of rubber in the product and the percent of the total rubber having the smaller and larger size rubber particles. RPS refers to volume average particle size of the rubber particles in micrometers, % refers to the weight percent of the total rubber having a smaller or larger size rubber particles, respectively, and the total weight of the rubber in the rubber-reinforced polymer based on the total weight of said product. Rubber size is determined using a commercially available particle size analyzer (e.g., a Coulter Counter) supplemented as necessary by visual phase contrast microscopy.

[2] Total graft is the total amount of polymer chains grafted to one or more rubber chains (both large and small rubber particles) and is measured using cold solvent extraction techniques. Specifically, the polystyrene is extracted from the rubber-reinforced polymer by first using a solvent of 80 parts acetone and 20 parts cyclohexane. After separation of the dissolved polystyrene, extraction is repeated using a solvent of 50 parts acetone and 50 parts methyl ethyl ketone. This later extraction is repeated once more on the undissolved residue. The undissolved sample is then dried and weighed. (Weight A). The weight is the total weight of the rubber and grafted polymer. The amount of rubber is determined by a method involving the reaction of the ethylenic bonds in the polymerized butadiene of the product with iodine monochloride, with the amount of rubber (Weight B) being determined using an excess of iodine monochloride by back titrating the unreacted iodine monochloride with a solution of sodium thiosulfate and

$$\text{Graft} = \frac{\text{Weight A} - \text{Weight B}}{\text{Weight B}}$$

the polymer grafted to the rubber particles of the smaller size is determined using similar techniques on a rubber-reinforced polystyrene comprising only the smaller size rubber particles. Specifically, for Sample No. 1, a rubber-reinforced polymer is prepared using the techniques employed in preparing Sample No. 1 except that 100 parts of the rubber/monomer solution is added to the top of the first reactor and no additional rubber is added to the polymerization mixture (i.e., Example A).

[3] Izod impact is notched Izod impact expressed in joules/meter (J/m), measured on basic state test specimens prepared using the methods described in International Standard 2897/2 and the test methods specified therein with N being the ratio of Izod impact expressed in J/m to the weight percent polymerized butadiene in the rubber.

[4] Gloss is measured using ASTM Test Method D523-80, 60° on a sample having dimensions of 10 cm×10 cm×2 mm which has been injection molded at a mold temperature of 40°C and a melt temperature of 215°C. The mold employed is a smooth surface mold having surface roughness factor 0.02. To prepare the test specimen the rubber-reinforced polymer is injected at an injection pressure which is increased until a flash molding appears and then reduced to a pressure such that no excess material (flash molding) appears. The injection pressure at that point is employed. The gloss is measured 3.5 cm from the side of the sample opposite the point of injection in the middle of the sample width.

[5] Elongation is determined on basic state test specimens prepared, using techniques described by International Standard 2897/2 and the test methods specified therein.

As evidenced by the data in the foregoing table, the balance of properties is obtained only when the highly grafted, smaller size, rubber particles and larger size, rubber particles are within the particle sizes specified in the present invention. Specifically, if the particle size of the larger rubber particle becomes too small, the elongation at break of the rubber-reinforced polymer decreases to an unacceptable level. Alternatively, if the rubber particle size of the smaller size particle becomes too large, the gloss is reduced to an unacceptable level. In addition, the results reported in the attached table indicate that the smaller rubber particle size must be highly grafted. The rubber-reinforced polymers prepared having a dispersed rubber phase of a monomodal particle size are found not to possess the desired toughness and gloss balance. In addition, the melt flow rates of Sample Nos. 1 and 2, as measured using the test method designated ASTM D-1238, Condition G (200°C; 5,000 g load), vary from 7 to 9 g/10 min.

Example 2

A rubber-reinforced polymer of styrene comprising a polystyrene matrix having rubber of a bimodal particle size distribution dispersed therethrough is prepared using the techniques employed in the preparation of Sample No. 1 of Example No. 1 except that the first rubber/monomer mixture contains 0.02 percent of 1,1-bis tertiary butyl peroxycyclohexane, a graft promoting initiator, in place of the tertiary butyl peroxybenzoate and 5 percent of a refined mineral oil. When the polymerization mixture reaches about 35 percent solids, 30 percent of the partially polymerized mixture which contains highly grafted rubber is recirculated and combined with the first rubber/monomer feed mixture.

The resulting rubber-reinforced polymer product has a bimodal particle size distribution with volume average particle sizes of 1.0 and 6.0 micrometers and a total small particle graft content of at least 1.3 times the weight of the rubber in the small particles. It exhibits a gloss of 79 percent, an Izod impact of 121 J/m, which is about 14 times the percent of rubber contained in the product, and an elongation of 21 percent.

Using a recirculation rate of 50 percent, similar properties were obtained in the resulting rubber-reinforced polymer product.

Example 3

Using the method of Example 1, a rubber-reinforced polymer of styrene comprising a polystyrene matrix having rubber of a bimodal particle size distribution dispersed therethrough is prepared using the techniques employed in Example No. 1 except that the first rubber/monomer mixture contains 0.02 percent of 1,1-bis tertiary butyl peroxycyclohexane. A graft promoting initiator, in place of the tertiary butyl peroxybenzoate, and 2.5 percent of a refined mineral oil and no graft promoting initiator is included in the second rubber-containing mixture. The resulting rubber-reinforced polymer product has a bimodal particle distribution with volume average particle sizes of 1.0 and 6.0 micrometers and a total small particle graft content of at least 1.3 times the weight of rubber in the small particles. It exhibits a gloss of 84 percent, an Izod impact of 92 J/m, which is about 11 times the percent of rubber contained in the product and an elongation of 27 percent. The melt flow rate is 4.5 g/10 min.

Example 4

A rubber-reinforced polymer of styrene comprising a polystyrene matrix having rubber of a bimodal particle size distribution dispersed therethrough is prepared using identical techniques employed in Example No. 3 except that rubber employed in preparing the large and small rubber particles is a low-cis polybutadiene rubber sold as Diene 35 NF-A by the Firestone Tire and Rubber Co. The resulting rubber-reinforced polymer product has a bimodal particle size distribution with volume average particle sizes of 1.0 and 6.0 micrometers and a total small particle graft content of at least 1.3 times the weight of rubber in the small particles. It exhibits a gloss of 80 percent, an Izod impact of 92 J/m which is also about 11 times the percent of rubber contained in the product and an elongation of 38 percent. The melt flow rate is 6 g/10 min.

Example 5

Using techniques identical to that of Example No. 3, a rubber-reinforced polymer of styrene comprising a polystyrene matrix having rubber of a bimodal particle size distribution dispersed therethrough is prepared except that the rubber/monomer mixtures contain 6.1 percent rubber (Diene 55). The resulting rubber-reinforced polymer product which contains 7 weight percent rubber (85 percent of the rubber having an average particle size of 1 micrometer and 15 percent of the rubber having an average particle size of 6 micrometers with a small particle graft content of at least 1.3 times the weight of rubber in the small particles. It exhibits a gloss of 85 percent, an Izod impact of 80 J/m which is about 11 times the percent of rubber contained in the product and an elongation of 44 percent. The melt flow rate was 4.8 g/10 min.

Example 6

A rubber-reinforced polymer of styrene comprising a polystyrene matrix having rubber bimodally dispersed therethrough is prepared using 1,1-bis tertiary butyl peroxycyclohexane. The matrix is prepared with the rubber (Diene 55) comprising 5.4 percent of the rubber-reinforced rubber product and with 74 percent of the rubber having an average particle size of 1 micrometer, the amount of polymer blend grafted thereto being at least 1.3 times the weight of rubber in the particles, 26 percent of the rubber having an average particle size of 6 micrometers. The product further contains 3.4 percent mineral oil. The resulting rubber-reinforced polymer product exhibits a gloss of 74 percent, an Izod impact of 81 J/m which is about 15 times the amount of rubber contained in the product and an elongation of 40 percent.

## Claims

1. A rubber-reinforced polymer comprising a polymer derived from one or more polymerizable monovinylidene aromatic compounds having discrete, grafted rubber particles dispersed throughout the polymer, wherein from 70 to 95 weight percent of the total amount of rubber is present in particles having a volume average diameter from 0.5 to 1.5 micrometer and from 5 to 30 weight percent of the total weight of rubber is present in particles having a volume average diameter from 4 to 10 micrometer and the total amount of polymer grafted to the rubber of the smaller size rubber particles is at least 1.3 times the weight of rubber in said smaller particles.

2. The rubber-reinforced polymer of Claim 1 wherein the rubber is a homo- or copolymer of 1,3-butadiene and the monovinylidene aromatic compound is styrene.

3. The rubber-reinforced polymer of Claim 2 wherein the particle sizes of the rubber, the amount of each particle size and the polymer graft are such that the rubber-reinforced polymer exhibits an elongation of at least 18 percent, a gloss of at least 70 percent and an impact strength, expressed as joules/meter, of at least 10 times the percent of polymerized butadiene in the rubber-reinforced polymer.

4. The rubber-reinforced polymer of Claim 2 wherein the particle sizes of the rubber, the amount of each particle size and the polymer graft are such that the rubber-reinforced polymer exhibits an elongation of at least 25 percent, a gloss of at least 80 percent and an impact strength, expressed as joules/meter, of at least 12 times the percent of polymerized butadiene in the rubber-reinforced polymer.

5. The rubber-reinforced polymer of Claim 2 wherein the particle sizes of the rubber, the amount of each particle size and the polymer graft are such that the rubber-reinforced polymer exhibits an elongation of at least 25 percent, a gloss of at least 60 percent and an impact strength, expressed as joules/meter, of at least 16 times the percent of polymerized butadiene in the rubber-reinforced polymer.

6. The rubber-reinforced polymer of Claim 2 wherein the particle sizes of the rubber, the amount of each particle size and the polymer graft are such that the rubber-reinforced polymer exhibits an elongation of at least 25 percent, a gloss of at least 90 percent and an impact strength, expressed as joules/meter, of at least 10 times the percent of polymerized butadiene in the rubber-reinforced polymer.

7. The rubber-reinforced polymer of Claim 2 wherein the rubber-reinforced polymer comprises from 5 to 10 weight percent rubber based on the total weight of the rubber-reinforced polymer, the volume average diameter of from 80 to 90 weight percent of said rubber is from 0.6 to 1.2 micrometer, the volume average diameter of from 10 to 20 weight percent of said rubber is from 4 to 8 micrometer and the rubber-reinforced polymer further comprises from 1 to 7 weight percent mineral oil, said weight percent being based on the weight of the rubber-reinforced polymer.

8. A rubber-reinforced polymer comprising a polymer derived from one or more polymerizable monovinylidene aromatic compounds having discrete, grafted rubber particles of a homopolymer or copolymer of 1,3-butadiene dispersed throughout the polymer, wherein from 70 to 95 weight percent of the total amount of rubber is present in particles having a volume average diameter of from 0.5 to 1.5 micrometers and 5 to 30 weight percent of the total weight of rubber is present in particles having a volume average diameter of from 4 to 10 micrometers and the total amount of polymer grafted to the total rubber of both the small and large size rubber particles is at least 1.3 times the weight of the rubber in said particles and is distributed between the rubber of the large and small particles such that the gloss of the rubber-reinforced polymer is at least 70 percent, the elongation is at least 18 percent, the Izod impact, measured in joules per meter (J/m), is at least 10 times the percent of butadiene in the rubber and the melt flow index is 3 to 12 g/10 min as determined by the method of ASTM D-1238, Condition G.

9. A method for preparing a rubber-reinforced polymer of one or more monovinylidene aromatic compounds having rubber of two different particle sizes dispersed through the aromatic polymer matrix, the method comprising the steps of mass polymerizing, in one or more substantially linear, stratified flow reactors, a first mixture comprising a solution of one or more polymerizable monovinylidene aromatic compounds and a rubber in the presence of an initiator which promotes polymer grafting to the rubber to form a continuous phase containing polymer of monovinylidene aromatic compound and discrete particles of highly grafted rubber particles having a volume average diameter from 0.5 to 1.5 micrometer; subsequently admixing a second rubber-containing mixture, which rubber can be the same as or different from the rubber of the first mixture, with the polymerization mixture at conditions such that the previously formed rubber particles remain dispersed throughout the continuous polymer phase and wherein the newly added rubber comprises from 5—30 weight percent of the rubber of the first and second rubber/monomer solutions and is dispersed as discrete particles having a volume average diameter from 4 to 10 micrometer.

10. The method of Claim 9 wherein the rubber in the second rubber-containing mixture is pre-grafted prior to the addition of the second mixture to the polymerization mixture.

11. The method of Claim 9 wherein the polymerization is conducted using continuous, mass polymerization techniques and the first mixture, prior to admixture with the second rubber-containing mixture, is polymerized at conditions sufficient to form a continuous phase comprising a partial polymerizate of the monovinylidene aromatic compound having the highly grafted, rubber particles of the desired size dispersed therethrough, the second rubber-containing mixture comprises a solution of rubber and one or more polymerizable monovinylidene aromatic compounds and, after the admixture of the first and second mixtures, polymerization is subsequently completed and the polymerization mixture subjected to conditions sufficient to remove the unreacted monomers and to crosslink the rubber.

12. The method of Claim 9 wherein, prior to admixture with the second rubber-containing mixture, the first mixture is polymerized at conditions sufficient to form a continuous phase comprising a partial polymerizate of the monovinylidene aromatic compound having the highly grafted, rubber particles of the desired size dispersed therethrough and the second rubber-containing mixture is polymerized at conditions sufficient to form a continuous phase comprising a partial polymerizate of one or more monovinylidene aromatic compounds having rubber particles of the desired size dispersed therethrough and, after the admixture of the first and second mixtures, polymerization is subsequently completed and the polymerization mixture subjected to conditions sufficient to remove the unreacted monomers and to crosslink the rubber.

### Patentansprüche

1. Mit Kautschuk verstärktes Polymer enthaltend ein Polymer, abgeleitet von einem oder mehreren polymerisierbaren monovinylidenaromatischen Verbindungen mit im gesamten Polymeren dispergierten diskreten gepfropften Kautschukteilchen, wobei von 70—95 Gew.% des gesamten anwesenden teilchenförmigen Kautschuks einen mittleren Volumendurchmesser von 0,5 bis 1,5 µm und von 5—30 Gew.% des gesamten anwesenden teilchenförmigen Kautschuks einen mittleren Volumendurchmesser von 4 bis 10 µm aufweisen und die Gesamtmenge des auf Kautschukteilchen mit kleinerer Teilchengröße aufgepfropften Polymeren mindestens das 1,3 fache des Gewichts des Kautschuks dieser kleineren Teilchen beträgt.

2. Mit Kautschuk verstärktes Polymer nach Anspruch 1, dadurch gekennzeichnet, daß der Kautschuk ein Homo- oder Copolymer von 1,3-Butadien ist und die monovinylidenaromatische Verbindung Styrol ist.

3. Mit Kautschuk verstärktes Polymer nach Anspruch 2, dadurch gekennzeichnet, daß die Teilchengrößen des Kautschuk, die Menge von jeder Teilchengröße und die Polymerpfropfung derart sind, daß das mit Kautschuk verstärkte Polymer eine Dehnung von mindestens 18%, einen Glanz von mindestens 70% und eine Schlagzähigkeit in Joule/m von mindestens dem 10fachen des Prozentsatzes von im mit Kautschuk verstärkten Polymer polymerisierten Butadien aufweist.

4. Mit Kautschuk verstärktes Polymer nach Anspruch 2, dadurch gekennzeichnet, daß die Teilchengröße des Kautschuk, die Menge von jeder Teilchengröße und die Polymerpfropfung derart sind, daß das mit Kautschuk verstärkte Polymer eine Dehnung von mindestens 25%, einen Glanz von mindestens 80% und eine Schlagzähigkeit in Joule/m von mindestens dem 12fachen des Prozentsatzes von im mit Kautschuk verstärkten Polymer polymerisierten Butadien aufweist.

5. Mit Kautschuk verstärktes Polymer nach Anspruch 2, dadurch gekennzeichnet, daß die Teilchengröße des Kautschuk, die Menge von jeder Teilchengröße und die Polymerpfropfung derart sind, daß das mit Kautschuk verstärkte Polymer eine Dehnung von mindestens 25%, einen Glanz von mindestens 60% und eine Schlagzähigkeit in Joule/m von mindestens dem 16fachen des Prozentsatzes von im mit Kautschuk verstärkten Polymer polymerisierten Butadien aufweist.

Mit Kautschuk verstärktes Polymer nach Anspruch 2, dadurch gekennzeichnet, daß die Teilchengröße des Kautschuk, die Menge von jeder Teilchengröße und die Polymerpfropfung derart sind, daß das mit Kautschuk verstärkte Polymer eine Dehnung von mindestens 25%, einen Glanz von mindestens 90% und eine Schlagzähigkeit in Joule/m von mindestens dem 10fachen des Prozentsatzes von im mit Kautschuk verstärkten Polymer polymerisierten Butadien aufweist.

7. Mit Kautschuk verstärktes Polymer nach Anspruch 2, dadurch gekennzeichnet, daß das mit Kautschuk verstärkte Polymer von 5—10 Gew.% Kautschuk bezogen auf das Gesamtgewicht des mit Kautschuk verstärkten Polymers enthält, wobei der mittlere Volumendurchmesser von 80—90 Gew.% dieses Kautschuks von 0,6—1,2 µm beträgt, der mittlere Volumendurchmesser von 10—20 Gew.% dieses Kautschuks von 4—8 µm beträgt und das mit Kautschuk verstärkte Polymer weiterhin von 1—7 Gew.% Mineralöl bezogen auf das Ge wicht des mit Kautschuk verstärkten Polymer enthält.

8. Mit Kautschuk verstärktes Polymer enthaltend ein Polymer, abgeleitet von einem oder mehreren polymerisierbaren monovinylidenaromatischen Verbindungen mit im gesamten Polymeren dispergierten diskreten gepfropften Kautschukteilchen eines Homo- oder Copolymeren von 1,3-Butadien, woebi 70—95 Gew.% des gesamten anwesenden teilchenförmigen Kautschuks einen mittleren Volumendurchmesser von 0,5 bis 1,5 µm und 5—30 Gew.% des gesamten anwesenden teilchenförmigen Kautschuks einen mittleren Volumendurchmesser von 4—10 µm aufweisen und die Gesamtmenge des auf den gesamten Kautschuk aus kleinen und großen Kautschukteilchen aufgepfropften Polymeren mindestens das 1,3fache des Kautschukgewichtes der Teilchen beträgt und zwischen den großen und kleinen Kautschukteilchen so verteilt ist, daß der Glanz des mit Kautschuk verstärkten Polymeren mindestens 70%, die Dehnung mindestens 18% beträg tund die Izod Kerbschlagzähigkeit in Joules/m mindestens das 10fache des Prozentsatzes von Butadien im Kautschuk und der Schmelzflußindex bestimmt nach ASTM D-1238, Bedingung G 3—12 g/10 min. beträgt.

9. Verfahren zum Herstellen eines mit Kautschuk verstärkten Polymer aus einem oder mehreren monovinylidenaromatischen Verbindungen mit in der gesamten aromatischen Polymermatrix dispergiertem Kautschuk von zwei unterschiedlichen Teilchengrößen enthaltend die Schritte Massepolymerisation einer ersten Mischung enthaltend eine Lösung eines oder mehrerer polymerisierbarer monovinylidenaromatischer Verbindungen und einen Kautschuk, in einem oder mehreren im wesentlichen linearen schichtförmigen Strömungsreaktoren in Gegenwart eines Starters, der das Aufpfropften von Polymer auf den Kautschuk fördert, um eine kontinuierliche Phase auszubilden, die Polymer der monovinylidenaromatischen Verbindung und diskrete Teilchen von hochgepfropften Kautschukteilchen mit einem mittleren Volumendurchmesser von 0,5 bis 1,5 µm enthält, anschließendes Einmischen einer zweiten Kautschuk enthaltenden Mischung, deren Kautschuk der gleiche wie der der ersten Mischung oder unterschiedlich sein kann, in die Polymerisationsmischung unter Bedingungen, daß die zuvor gebildeten Kautschukteilchen in der gesamten kontinuierlichen Polymerphase dispergiert bleiben und wobei der neu hinzugefügte Kautschuk von 5—30 Gew.% bezogen auf Kautschuk der ersten und zweiten Kautschuk/Monomerlösungen enthält und als diskrete Teilchen mit einem mittleren Volumendurchmesser von 4—10 µm dispergiert ist.

10. Verfahren nach Anspruch 9, dadurch gekennzeichnet, daß der Kautschuk in der zweiten Kautschuk enthaltenden Mischung vor der Zugabe der zweiten Mischung zur Polymerisationsmischung vorgepfropft wird.

11. Verfahren nach Anspruch 9, dadurch gekennzeichnet, daß die Polymerisation als kontinuierliche Massepolymerisation ausgeführt und die erste Mischung vor dem Einmischen der zweiten Kautschuk enthaltenden Mischung unter Bedingungen polymerisiert wird, die ausreichen, eine kontinuierliche Phase auszubilden, die ein Teilpolymerisat der monovinylidenaromatischen Verbindungen mit den darin dispergierten hoch gepfropften Kautschukteilchen der gewünschten Größe enthält, wobei dei zweite Kautschuk enthaltende Mischung eine Lösung von Kautschuk und einer oder mehrerer polymerisierbarer monovinylidenaromatischer Verbindungen enthält, die Polymerisation nach dem Mischen der ersten und zweiten Mischungen zu Ende geführt wird und die Polymerisationsmischung Bedingungen ausgesetzt wird, die ausreichen, um nicht umgesetzte Monomere zu entfernen und den Kautschuk zu vernetzen.

12. Verfahren nach Anspruch 9, dadurch gekennzeichnet, daß die erste Mischung vor dem Einmischen der zweiten Kautschuk enthaltenden Mischung unter Bedingungen polymerisiert wird, die ausreichen, eine kontinuierliche Phase auszubilden, die ein Teilpolymerisat der monovinylidenaromatischen Verbindung mit den darin dispergierten hochgepfropften Teilchen der gewünschten Größe enthält und die zweite Kautschuk enthaltende Mischung unter Bedingungen polymerisiert wird, die ausreichen, eine kontinuierliche Phase auszubilden, die ein Teilpolymerisat der monovinylidenaromatischen Verbindungen mit den darin dispergierten Kautschukteilchen der gewünschten Größe enthält und die Polymerisation nach dem Mischen der ersten und zweiten Mischungen zu Ende geführt wird und die Polymerisationsmischung Bedingungen ausgesetzt wird, die ausreichen, um nicht umgesetzte Monomere zu entfernen und den Kautschuk zu vernetzen.

**Revendications**

1. Polymère renforcé par du caoutchouc comprenant un polymère dérivé d'un ou plusieurs composés monovinyl aromatiques polymérisables, présentant des particules de caoutchouc greffées, discrètes, dispersées dans tout le polymère, dans lequel de 70 à 95 pour cent en poids de la quantité totale de caoutchouc sont présents sous forme de particules présentant un diamètre moyen de volume allant de 0,5 à 1,5 micromètre, et de 5 à 30 pour cent en poids du poids total du caoutchouc sont présents sous la forme de particules ayant un diamètre moyen de volume allant de 4 à 10 micromètres, et la quantité totale de polymère greffé sur le caoutchouc des particules de caoutchouc de plus petite taille est d'au moins 1,3 fois le poids du caoutchouc dans lesdites particules plus petites.

2. Polymère renforcé par du caoutchouc selon la revendication 1, dans lequel le caoutchouc est un homo- ou copolymère du butadiène-1,3, et le composé monovinyl aromatique est le styrène.

3. Polymère renforcé par du caoutchouc selon la revendication 2, dans lequel les tailles de particule du caoutchouc, la valeur de chaque taille de particule et le greffage de polymère sont tels que le polymère renforcé par du caoutchouc présente un allongement d'au moins 18 pour cent, un brillant d'au moins 70 pour cent et une résistance au choc, exprimée en joules/mètre, d'au moins 10 fois le pourcentage de butadiène polymérisé dans le polymère renforcé par du caoutchouc.

4. Polymère renforcé par du caoutchouc selon la revendication 2, dans lequel les tailles de particule du caoutchouc, la valeur de chaque taille de particule et le greffage de polymère sont tels que le polymère renforcé par du caoutchouc présente un allongement d'au moins 25 pour cent, un brillant d'au moins 80 pour cent et une résistance au choc, exprimée en joules/mètre, d'au moins 12 fois le pourcentage de butadiène polymérisé dans le polymère renforcé par du caoutchouc.

5. Polymère renforcé par du caoutchouc selon la revendication 2, dans lequel les tailles de particule du caoutchouc, la valeur de chaque taille de particule et le greffage de polymère sont tels que le polymère renforcé par du caoutchouc présente un allongement d'au moins 25 pour cent, un brillant d'au moins 60 pour cent et une résistance au choc, exprimée en joules/mètre, d'au moins 16 fois le pourcentage de butadiène polymérisé dans le polymère renforcé par du caoutchouc.

6. Polymère renforcé par du caoutchouc selon la revendication 2, dans lequel les tailles de particule du caoutchouc, la valeur de chaque taille de particule et le greffage de polymère sont tels que le polymère renforcé par du caoutchouc présente un allongement d'au moins 25 pour cent, un brillant d'au moins 90 pour cent et une résistance au choc, exprimée en joules/mètre, d'au moins 10 fois le pourcentage de butadiène polymérisé dans le polymère renforcé par du caoutchouc.

7. Polymère renforcé par du caoutchouc selon la revendication 2, dans lequel le polymère renforcé par du caoutchouc comprend de 5 à 10 pour cent en poids de caoutchouc par rapport au poids total du polymère renforcé par du caoutchouc, le diamètre moyen de volume de 80 à 90 pour cent en poids dudit caoutchouc est de 0,6 à 1,2 micromètre, le diamètre moyen de volume de 10 à 20 pour cent en poids dudit caoutchouc est de 4 à 8 micromètres, et le polymère renforcé par du caoutchouc comprend, en outre, de 1 à 7 pour cent en poids d'huile minérale, ledit pourcentage en poids étant rapporté au poids du polymère renforcé par du caoutchouc.

8. Polymère renforcé par du caoutchouc comprenant un polymère dérivé d'un ou plusieurs composés monovinyl aromatiques polymérisables, présentant des particules de caoutchouc greffées, discrètes, d'un homopolymère ou d'un copolymère de butadiène-1,3 dispersées dans tout le polymère, dans lequel de 70 à 95 pour cent en poids de la quantité totale du caoutchouc sont présents sous la forme de particules ayant un diamètre moyen de volume de 0,5 à 1,5 micromètre et 5 à 30 pour cent en poids du poids total de caoutchouc sont présents sous la forme de particules présentant un diamètre moyen de volume de 4 à 10 micromètres, et la quantité totale de polymère greffé sur le caoutchouc total des particules de caoutchouc à la fois de petite taille et de grande taille est d'au moins 1,3 fois le poids du caoutchouc dans lesdites particules et est répartie entre le caoutchouc des grandes et petites particules, de telle sorte que le brillant du polymère renforcé par du caoutchouc soit d'au moins 70 pour cent, l'allongement soit d'au moins 18 pour cent, le choc Izod, mesuré en joules par mètre (J/m), soit d'au moins 10 fois le pourcentage de butadiène dans le caoutchouc, et l'indice de fusion soit de 3 à 12 g/10 minutes, tel que déterminé par la méthode de ASTM D 1238, Condition G.

9. Procédé pour préparer un polymère renforcé par du caoutchouc d'un ou plusieurs composés monovinyl aromatiques, présentant du caoutchouc de deux tailles différentes de particules dispersé dans toute la matrice polymère aromatique, le procédé comprenant les étapes consistant à polymériser en masse, dans un ou plusieurs réacteurs à écoulement stratifié, sensiblement linéaire, un premier mélange comprenant une solution d'un ou plusieurs composés monovinyl aromatiques polymérisables et un caoutchouc en présence d'un initiateur qui active le greffage du polymère sur le caoutchouc, afin de former une phase continue contenant le polymère du composé monovinyl aromatique et des particules discrètes de particules de caoutchouc fortement greffées, présentant un diamètre moyen de volume de 0,5 à 1,5 micromètre; puis à réaliser le mélangeage d'un second mélange contenant du caoutchouc, ledit caoutchouc pouvant être identique à ou différent du caoutchouc du premier mélange, avec le mélange de polymérisation, dans des conditions telles que les particules du caoutchouc préalablement formées restent dispersées dans toute la phase polymère continue et où le caoutchouc nouvellement ajouté comprend de 5—30 pour cent en poids du caoutchouc des première et seconde solutions caoutchouc/monomère et est dispersé sous forme de particules discrètes ayant un diamètre moyen de volume de 4 à· 10 micromètres.

10. Procédé selon la revendication 9, dans lequel le caoutchouc du second mélange contenant du caoutchouc est pré-greffé avant l'addition du second mélange au mélange de polymérisation.

11. Procédé selon la revendication 9, dans lequel la polymérisation est effectuée à l'aide des techniques de polymérisation en masse, en continu, et le premier mélange, avant le mélangeage avec le second mélange contenant du caoutchouc, est polymérisé dans des conditions suffisantes pour former une phase continue comprenant un polymérisat partiel du composé monovinyl aromatique ayant les particules de caoutchouc, fortement greffées, de la taille désirée, dispersées en son sein, le second mélange contenant du caoutchouc comprend une solution de caoutchouc et un ou plusieurs composés monovinyl aromatiques polymérisables, et, après le mélangeage des premier et second mélanges, la polymérisation est ensuite achevée, et le mélange de polymérisation soumis à des conditions suffisantes pour éliminer le monomère n'ayant pas réagi et pour réticuler le caoutchouc.

12. Procédé selon la revendication 9, dans lequel, avant le mélangeage avec le second mélange contenant du caoutchouc, le premier mélange est polymérisé dans des conditions suffisantes pour former une phase continue comprenant un polymérisat partial du composé monovinyl aromatique présentant les particules de caoutchouc fortement greffées, de la taille désirée, dispersées en son sein, et le second mélange contenant du caoutchouc est polymérisé dans des conditions suffisantes pour former une phase continue comprenant un polymérisat partiel d'un ou plusieurs composés monovinyl aromatiques présentant des particules de caoutchouc, de la taille désirée, dispersées en son sein, et, après le mélangeage des premier et second mélanges, la polymérisation est ensuite achevée et le mélange de polymérisation soumis à des conditions suffisantes pour éliminer les monomères n'ayant pas réagi et pour réticuler le caoutchouc.